# EUROPEAN PATENT APPLICATION

(11) **EP 3 223 154 A1**
(43) Date of publication of application: **27.09.2017**
(21) Application number: 16196327.7
(22) Date of filing: 28.10.2016
(51) Int. Cl.: G06F 9/445, H04L 29/08, G06Q 50/06

(54) **METHOD OF SYNCHRONIZING USER SETTING DATA AMONG MULTIPLE CENTERS**

(30) Priority: 25.03.2016 KR 20160036024
(71) Applicant: LSIS Co., Ltd., Gyeonggi-do 14119 (KR)
(72) Inventor: KIM, Tae-Seop, 14118 Gyeonggi-do (KR); BAHNG, Soon-Jong, 14118 Gyeonggi-do (KR); LEE, Seok-Chan, 14118 Gyeonggi-do (KR); LEE, Yong-Ik, 14118 Gyeonggi-do (KR)
(74) Representative: Zacco Sweden AB

(57) **Abstract**

Disclosed herein is a method of synchronizing data among multiple EMS centers. The method may include updating (S110) user setting data by a client in a main center; transmitting (S120) the user setting data from the main center to a secondary center; and synchronizing (S130) the user setting data between the main center and the secondary center.

## Description

### BACKGROUND

### 1. Technical Field

The present disclosure relates to multiple EMS centers and, more specifically, to a method of synchronizing user setting data between a main center and a secondary center by which the user setting data in the main center can be synchronized with that of the secondary center in real-time.

### 2. Description of the Related Art

To monitor and manage a large-scale power system, multiple secondary centers may be installed at remote locations from a main center, and each of the centers may work as an energy management system (EMS).

Such an EMS is an important system that predicts power demands across several regions and controls the electricity generation, and may have duplex servers for sate operation, i.e., a primary server and a standby server or an active server and a backup server.

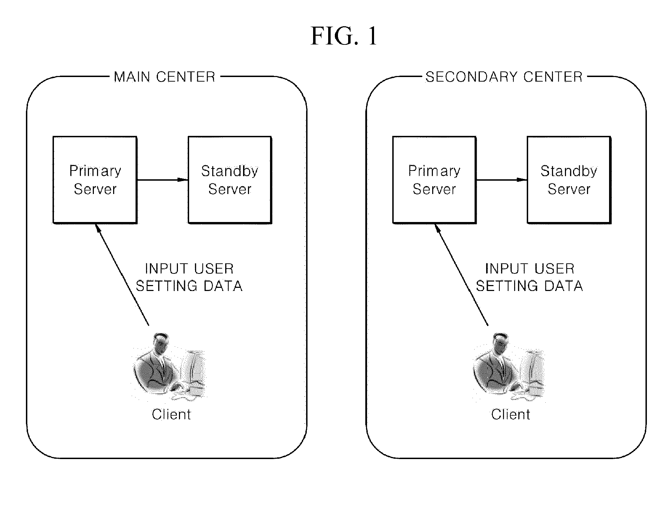

FIG. 1 is a diagram conceptually illustrating a main center and a secondary center.

The main center includes a primary server and a standby server. Similarly, the secondary center also includes a primary server and a standby server.

When each of the centers operates an EMS, data is synchronized to and backed up in the standby server to cope with a fault in the primary server currently operating.

The main center and the secondary center are operated with a remote monitoring control system operating system, hereinafter referred to as a supervisory control and data acquisition (SCADA) operating system. The main center and the secondary center acquire state information on remote devices or data via analog or digital signals, and transmit it to or log it in a remote terminal unit. In the SCADA operating system, the data in the main center is reflected to and backed up in the secondary center.

Accordingly, if a client in the main center changes user setting data, e.g., a manual input value, alarm-deactivation information and the like, the corresponding information in the secondary center is updated as well. In this manner, even if a fault occurs in the main center, the secondary center works on behalf of the main center by using the same data stored in the secondary center, such that the EMS can be operated stably.

In the related art, however, when changed user setting data in the main center is transmitted to each secondary center, a client in the secondary center checks the changed information to input it. In doing so, data may be missed if the client in the secondary center makes a mistake or if an unexpected situation occurs.

This makes data between the main center and the secondary center different, i.e., the synchronization fails. As a result, if an emergency takes place later on, there may be a problem in that the EMS operates in an environment different from the operating environment the main center provides.

In view of the above, what is required is an approach that allows the information updated in the main center to be quickly reflected to the secondary center without missing it.

### SUMMARY

It is an object of the present disclosure to provide a method of synchronizing user setting data between a main center and a secondary center by which the user setting data in the main center can be synchronized with that of the secondary center in real-time.

It is another object of the present disclosure to provide a method of synchronizing user setting data between a main center and a secondary center by which the user setting data in the main center can be synchronized with that of the secondary center in real-time even if a client in the secondary center is not aware of a change in the primary server of the main center.

It is yet another object of the present disclosure to provide a method of synchronizing user setting data between a main center and a secondary center by which data missing or data error for multiple control centers can be reduced and the system can be operated stably with high data reliability

Objects of the present disclosure are not limited to the above-described objects and other objects and advantages can be appreciated by those skilled in the art from the following descriptions. Further, it will be easily appreciated that the objects and advantages of the present disclosure can be practiced by means recited in the appended claims and a combination thereof.

In accordance with one aspect of the present disclosure, a method includes updating user setting data by a client in a main center; transmitting the user setting data from the main center to a secondary center; and synchronizing the user setting data between the main center and the secondary center.

The updating may include changing the user setting data to input it in a primary server of the main center.

The transmitting may include transmitting the user setting data from the primary server of the main center to a primary server of the secondary center.

The transmitting the user setting data from the primary server of the main center to the primary server of the secondary center may be carried out by using TCP/IP protocol.

The synchronizing may include storing the user setting data in the primary server of the secondary center without intervention of the client of the secondary center.

As set forth above, according to an exemplary embodiment of the present disclosure, the user setting data in the main center can be synchronized with that of the secondary center in real-time.

In addition, according to an exemplary embodiment of the present disclosure, the user setting data in the main center can be synchronized with that of the secondary center in real-time even if a client in the secondary center is not aware of a change in the primary server of the main center.

Moreover, according to an exemplary embodiment of the present disclosure, data missing or data error for multiple control centers can be reduced and the system can be operated stably with high data reliability.

### BRIEF DESCRIPTION OF DRAWINGS

FIG. 1 is a diagram conceptually illustrating a main center and a secondary center;
FIG. 2 is a diagram for conceptually illustrating data synchronization between a main center and a secondary center according to an exemplary embodiment of the present disclosure; and
FIG. 3 is a flowchart for illustrating a process of synchronizing data between the main center and the secondary center according to the exemplary embodiment shown in FIG. 2.

### DETAILED DESCRIPTION

Detailed descriptions of well-known functions and structures incorporated herein will be omitted to avoid obscuring the subject matter of the present disclosure. Further, terms or words used in the specification and claims shall not be construed merely in a conventional and dictionary definition but shall be construed in a meaning and concept corresponding to the technical idea of the present invention based on the principle that an inventor is allowed to properly define the concepts of terms in order to describe his or her invention in the best way. Therefore, the terms, such as those defined in commonly used dictionaries, should be interpreted as having a meaning that is consistent with their meaning in the context of the relevant art and/or the present application.

Combinations of blocks in the accompanying drawings and steps in a flow chart may be performed according to computer program instructions. These computer program instructions can be installed in general-purpose computers, special-purpose computers or other processors of programmable data processing equipment. Therefore, the instructions executed by the computers or other processors of programmable data processing equipment create means for performing functions described in blocks in the drawings or in steps in the flow charts.

These computer program instructions can be stored in computer-usable or computer-readable memories which can assist in the computers or other processors of programmable data processing equipment to implement particular functions in particular manners. Therefore, the instructions stored in the computer-usable or computer-readable memories can be used to make products containing instruction means for performing the functions described in the blocks in the drawings or in the steps in the flow charts.

The computer program instructions may also be installed in computers or other programmable data processing device. Such instructions may create computer-executable processes to perform a sequence of operation steps on computers or other programmable data processing devices. In addition, the instructions may also be installed in computers or other programmable data processing device. Such instructions can provide steps for executing the functions described in the blocks in the drawings or in the steps in the flowchart.

In addition, the blocks or the steps may represent portions of modules, segments or codes including one or more executable instructions for executing a specified logical function(s). In addition, in some alternative embodiments, it should be noted that the functions described in the blocks or steps may be performed out of a specified sequence. For example, two consecutive blocks or steps may be performed substantially simultaneously or may be performed in the reverse order depending on the function to be performed.

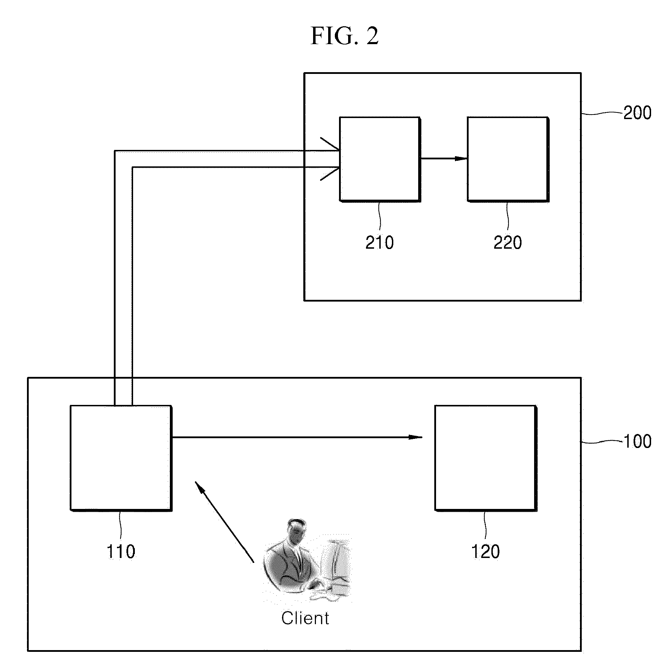

FIG. 2 is a diagram for conceptually illustrating data synchronization between a main center and a secondary center according to an exemplary embodiment of the present disclosure.

According to the exemplary embodiment of the present disclosure, when user setting data is input in the main center, the user setting data is transmitted to the secondary center, such that the data can be synchronized quickly and accurately between the main center and the secondary center without intervention of a client.

Referring to FIG. 2, a main center 100 and a secondary center 200 connected to it are operated in the SCADA operate system.

The main center 100 includes a primary server 110 and a standby server 120.

The secondary center 200 includes a primary server 210 and a standby server 220.

The primary servers 110 and 210 are active servers that currently operate the system. The standby servers 120 and 220 are servers that back up the content of the respective primary servers to ensure data safety.

The secondary center 200 is connected to the main center 100 and operates the EMS via its servers to thereby predict power demands across several regions and control electricity generation.

The main center 100 includes a processing (not shown) to control the primary server 110 and the standby server 120. This allows the data in the primary server 110 to be synchronized table by table, for example, to be backed up in the standby server 120 or to control data transmission of the secondary center 200. As used herein, a table is a set of memory blocks. A memory block is a unit of functional memories.

Similarly, the secondary center 200 may also include a processor (not shown) for controlling the primary server 210 and the standby server 220, and may synchronize the data in the primary server 210 table by table, for example, to back up the data in the standby server 220 via the processor.

The main center 100 has the address of the secondary center 200, specifically an IP address. When a fault occurs in the main center 100, the main center 100 may be interrupted and switched over to the secondary center 200.

Accordingly, the secondary center 200 may have to work on behalf of the main center 100, the data synchronization between the main center 100 and the secondary center 200 is very important.

To this end, according to the exemplary embodiment, when a client changes user setting data in the primary center 100 to input it to the primary server 110, the changed user setting data is input to the primary server 210 of the secondary center 200 without intervention of or operation by a client in the secondary center 200.

The user setting data may be manual input data necessary for the overall control of the EMS, system monitoring, power generation monitoring and transmission/transformation monitoring, or user input information such as an alarm deactivation.

According to the exemplary embodiment of the present disclosure, when user setting data is changed in the primary server 110 of the main center 100, it may be transmitted to the primary server 210 of the secondary center 200 via the TCP/IP communications protocol.

Specifically, the processing of the main center 100 has the IP address of the primary server 210 of the secondary center 200. Accordingly, the processing of the main center 100 may be transmit the updated data in the primary server 110 of the main center 100 to the primary server 210 of the secondary center 200. For example, when the client newly changes the user setting data in the primary server 110 of the main center 100, it may be transmitted to the primary server 210 of the secondary center 200 within several seconds.

By doing so, the main center 100 and the secondary center 200 can be synchronized even though the client of the secondary center 200 is not aware of the change in data or situation.

Although the single secondary center 200 is illustrated for convenience of illustration, more than one secondary centers may exist. Also in this case, updated data in the primary server of the main center may be transmitted at the IP address of each of the secondary centers in the same manner, the main center and the multiple secondary centers can be synchronized.

For example, when there are multiple secondary centers, the main center 100 may have the IP address of the primary server of each of the secondary centers. Accordingly, the processing of the main center 100 may transmit the updated data in the primary server 110 of the main center 100 to the primary server of each of the secondary centers either simultaneously or sequentially depending on the function and type of the secondary centers.

In addition, although not shown in the drawings, when there is one or more sub-center connected to the secondary center 200, the secondary center 200 may transmit the user setting data transmitted from the main center 100 to the sub-center. The secondary center 200 may have the IP address of the primary server of the sub-center or may receive the IP address of the primary server of the sub-center from the main center 100.

Previously, when user setting data in the primary server of the main center is updated, it was transmitted to the client in the secondary center in the form of a written or oral message. Accordingly, in the course of transmitting the data, data may be lost or erroneous data may be transmitted to the primary server of the secondary center due to the client's carelessness or mistake. As a result, the user setting data is different between the main center and the secondary center and thus they could not be synchronized. This results in a problem in the reliability of data in the secondary center when a fault occurs in the main center.

In contrast, according to the exemplary embodiment of the present disclosure, the user setting data updated by the client in the main center 100 is directly transmitted to the secondary center 200. Accordingly, the reliability of data between the main center 100 and the secondary center 200, in addition to data synchronization between the main center 100 and the secondary center 200, can be improved. As there is separate area for storing user setting data of the main center 100, the synchronized data may be stored and backed up in the main center 100 and the secondary center 200 continuously. Accordingly, it is possible to cope with the situation where communications failure takes place so that synchronization is not possible. For example, when there is a change in climate or unexpected situation occurs, it may not possible to send the user setting data stored in the storage unit of the main center 100 to the secondary center 200 or to synchronize it within several seconds. According to the exemplary embodiment of the present disclosure, it is possible to cope with such emergency situations by loading the user setting data stored in the storage unit of the secondary center 200.

Incidentally, the user setting data, the data created at the timing of starting, and server calculation data or the like in the primary server 210 of the secondary center 200 may be backed up in the standby server 220 table by table. In this manner, database can be synchronized between the primary server 210 and the standby server 220 of the secondary center 200. This is to implement dual storage of data of the secondary center 200 to cope with switchover situation of the primary server 210 of the secondary center 200, which is obvious to those skilled in the art.

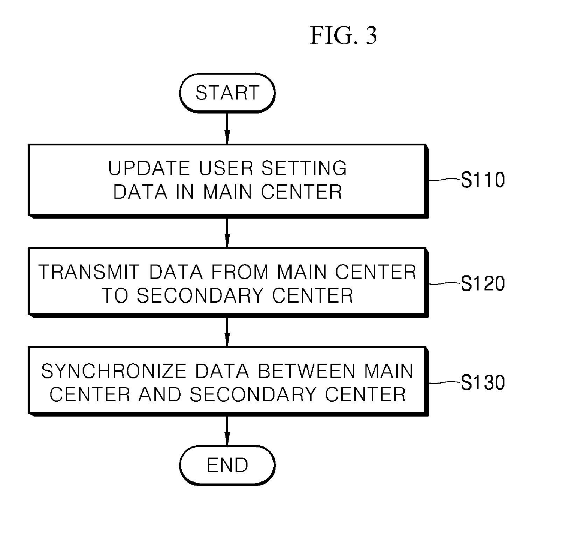

FIG. 3 is a flowchart for illustrating a process of synchronizing data between multiple centers according to the exemplary embodiment shown in FIG. 2.

Descriptions will be made below with reference to FIGS. 2 and 3.

A client in the main center 100 updates user setting data (step S110).

Accordingly, the client in the main center 100 changes the user setting data to input to the primary server 110. When the changed user setting data is input to the primary server 110, the communications state of the main center 100 and the secondary center 200 is checked prior to start synchronization of the user setting data.

Subsequently, the updated user setting data in the primary server 110 of the main center 100 is transmitted to the primary server 210 of the secondary center 200 (step S120).

The processing of the main center 100 is aware of the IP address of the primary server 210 of the secondary center 200. Accordingly, data may be transmitted from the primary server 110 of the main center 100 to the primary server 210 of the secondary center 200 by using the TCP/IP protocol.

Subsequently, the user setting data between the main center 100 and the secondary center 200 can be synchronized (step S130).

The synchronization can be completed as the primary server 210 of the secondary center 200 stores the data transmitted from the primary server 110 of the main center 100. This implies that the synchronization can be made even if the client of the secondary center 200 is not aware of that there is a change in the primary server 110 of the primary server 110. Moreover, according to the exemplary embodiment of the present disclosure, data transmission between the primary server 110 of the main center 100 and the primary server 210 of the secondary center 200 is carried out in real-time, such that data can be changed quickly and accurately.

In addition, the updated data in the primary server 210 of the secondary center 200 may be backed up in the standby server 220 table by table.

Afterwards, when a fault occurs in the main center 100 and the system switchover situation takes place, the EMS operation is switched over to the secondary center 200 to be supported stably.

In this manner, it is possible to reduce data missing or data error by users, such that the system can be operated stably with high data reliability.

The present disclosure described above may be variously substituted, altered, and modified by those skilled in the art to which the present invention pertains without departing from the scope and sprit of the present disclosure. Therefore, the present disclosure is not limited to the above-mentioned exemplary embodiments and the accompanying drawings.

## Claims

1. A method of synchronizing user setting data between a main center and a secondary center, the method comprising:
updating user setting data by a client in a main center (100);
transmitting the user setting data from the main center (100) to a secondary center (200); and
synchronizing the user setting data between the main center (100) and the secondary center (200),
wherein the updating comprises changing the user setting data to input it in a primary server (110) of the main center (100).

2. The method of claim 1, wherein the transmitting comprises transmitting the user setting data from the primary server (110) of the main center (100) to a primary server (210) of the secondary center (200).

3. The method of claim 2, wherein the transmitting the user setting data from the primary server (110) of the main center (100) to the primary server (210) of the secondary center (200) is carried out by using TCP/IP protocol.

4. The method of claim 1, wherein the updating comprises storing the user setting data in the primary server (210) of the secondary center (200).

5. The method of claim 1, comprising:
loading the user setting data in the secondary center (200) when communications failure occurs.

6. The method of claim 1, wherein the changing comprises checking communications conditions of the main center (100) and the secondary center (200) to start the synchronization of the user setting data.

7. The method of claim 4, wherein the secondary center (200) further comprises a standby server (220), and
wherein the method comprises backing up the user setting data from the primary server (210) of the secondary center (200) to the standby server (220) table by table, wherein the table is defined as a set of memory blocks.
